Europäisches Patentamt

European Patent Office

Office européen des brevets

(19)

(11) Publication number: **0 399 115**
**A1**

## (12) EUROPEAN PATENT APPLICATION

(21) Application number: **89305375.1**

(22) Date of filing: **26.05.89**

(51) Int. Cl.⁵: **G05D 23/19, H02H 7/08**

(43) Date of publication of application:
**28.11.90 Bulletin 90/48**

(84) Designated Contracting States:
**AT BE CH DE ES FR GB GR IT LI LU NL SE**

(71) Applicant: **Knott, Anthony Richard**
**148A Vaughan Road**
**West Harrow Middlesex, HA1 4EB(GB)**

Applicant: **PYRAMID POWER SYSTEMS LTD.**
**Unit 9D Highgate Industrial Estate**
**Commercial Road**
**Goldthorpe Rotherham South Yorkshire, S63 9BL(GB)**

(72) Inventor: **Knott, Anthony Richard**
**148A Vaughan Road**
**West Harrow Middlesex, HA1 4EB(GB)**

(74) Representative: **Jones, Graham H.**
**Graham Jones & Company 77 Beaconsfield Road Blackheath**
**London SE3 7LG(GB)**

(54) Electrical control device.

(57) An electrical control device including means responsive to an interruption in a current flow to prevent re-establishment of said current flow for a predetermined period after said interruption. The electrical control device can be used for controlling the supply of equipment to current incorporating a thermostat, for example electric heaters, central heating systems and cooling systems.

EP 0 399 115 A1

FIG 1

1a

## ELECTRICAL CONTROL DEVICE

This invention relates to an electrical control device for controlling the current supply to electrical equipment and, in particular, though not exclusively, to an electrical control device for controlling the supply of current to equipment incorporating a thermostat, for example electric heaters, central heating systems etc.

Control systems exist which attempt to reduce the amount of energy consumed by a gas central heating system whilst still providing adequate heating performance. However, these control systems are expensive and are restricted to use with gas central heating systems. The applicant's studies have shown that it is possible to produce a relatively inexpensive control device which achieves a reduction in fuel costs and which may be inserted into the power supply to the heating system to effect control, and which is applicable to electric fan or convector heaters as well as to typical central heating systems.

According to one aspect of this invention, there is provided an electrical control device including means responsive to an interruption in a current flow to prevent re-establishment of said current flow for a predetermined period after said interruption.

The invention also extends to heating systems incorporating the electrical control device defined above.

A preferred embodiment of this invention implements a method of control for a thermostatically and electrically operated system wherein, immediately after the thermostat opens to interrupt the current supply to the system, further operation is prevented for a preset period after opening of the thermostat. This arrangement means that the temperature sensed by the thermostat will achieve that set by the thermostat but that the period between successive energisations of the heating source, be it a gas or other fuel boiler or an electric heating element, is normally extended as compared to the case where the control system is not employed, and thus energy consumption is reduced. Clearly, the mean temperature will decrease, but it is believed that, with appropriate setting of the preset period it is possible to provide a heating routine where the temperature perceived by an occupant of the room does not vary significantly. It is believed that the temperature perceived by an occupant in a room depends more on the peak temperatures achieved rather than the mean temperatures. It will of course be appreciated that, even if the occupants of a room do perceive a variation in temperature, the device still offers benefits because it may also serve to prevent excessive consumption by enforcing a rest period after each cycle of operation of a thermostat or other switch control.

Further aspects of the invention will become apparent from the following non-limiting description of embodiments of the invention, reference being made to the accompanying drawings, in which:-

Figure 1 is a circuit diagram of an electrical control device according to an embodiment of the invention;

Figures 2 a-c are front, top and end views of an electrical control unit with outlet sockets; and

Figures 3 a-c are front, top and end views of an electrical control unit for gas/oil central heating units.

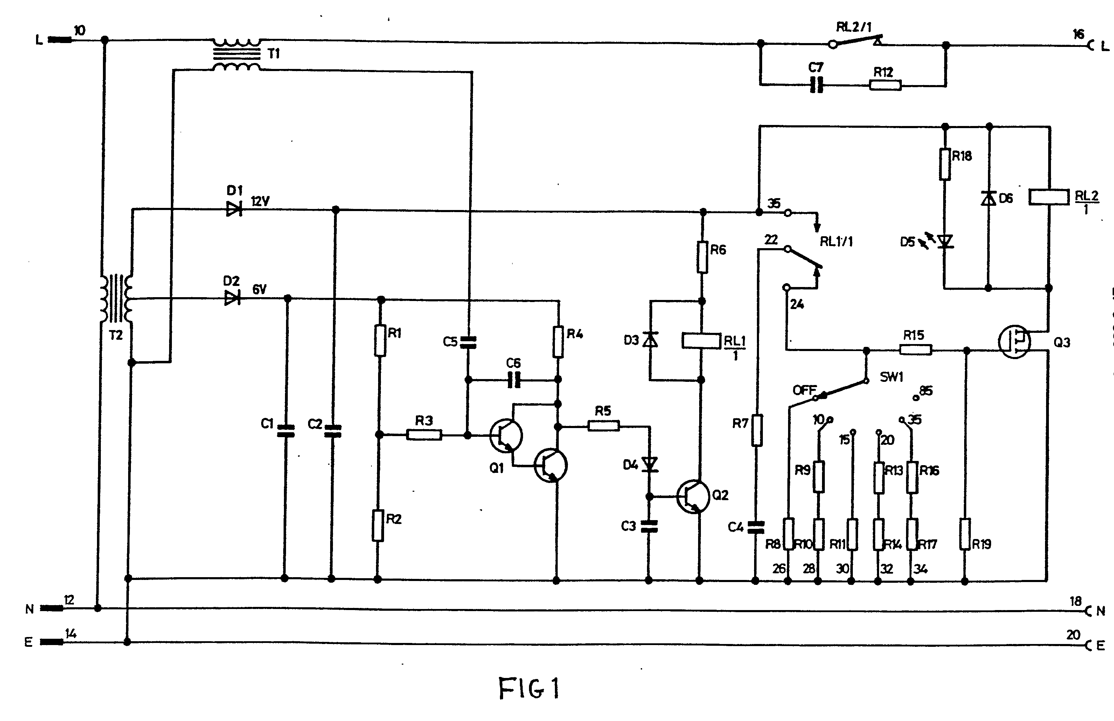

Referring initially to Figure 1, a.c. mains power is input to the circuit by live, neutral and earth inputs 10, 12 and 14, and is output from corresponding outputs 16, 18 and 20 to a device to be controlled. From the live input 10, current is supplied to the primary winding of a special step down transformer T1 having a primary winding with only 30 turns. The secondary winding of the transformer T1 is connected to the base input of a high gain Darlington pair Q1. Current from the live input 10 is also supplied to a transformer T2 to provide via diodes D1 and D2 a rectified half-wave direct current supply for various elements of the circuit as to be described below. The output collector of the Darlington pair is connected via a resistor and a diode D4 to a capacitor C3. The voltage across capacitor C3 is applied to the base of a transistor Q2. The emitter of the transistor Q2 is connected to ground and the collector is connected to the winding of a first relay RL1 to effect switching of the relay. Power for the relay winding is provided from the transformer T2 and a protection diode D3 is connected across the winding. The movable contact 22 of the relay RL1 is connected via a resistor to a storage capacitor C4. In the rest state the contact 22 is in contact with stationary contact 24 which is connected to switch SW1 which allows switching between 5 discharge loads 26, 28, 30, 32 and 34 which correspond to rest periods of: off or 0 min; 10 min; 15 min; 20 min; 35 min and 85 min respectively. The other stationary contact 35 of the relay RL1 receives power from the transformer T2. The input of switch SW1 is also connected via a resistor to the gate of a Vmos transistor chip Q3. The source of the transistor Q3 is connected to ground and the drain is connected to the winding of a second relay RL2 having two normally closed contacts. Connected across the winding is a LED indicator D5, and a protection diode D6. The winding of relay RL2 is supplied with power via transformer T2 and indicator D5 indicates when relay RL2 is energised. One of the contacts of the second relay RL2 is connected to the primary winding of the first transformer T1 the other contact being connected to the live output 16.

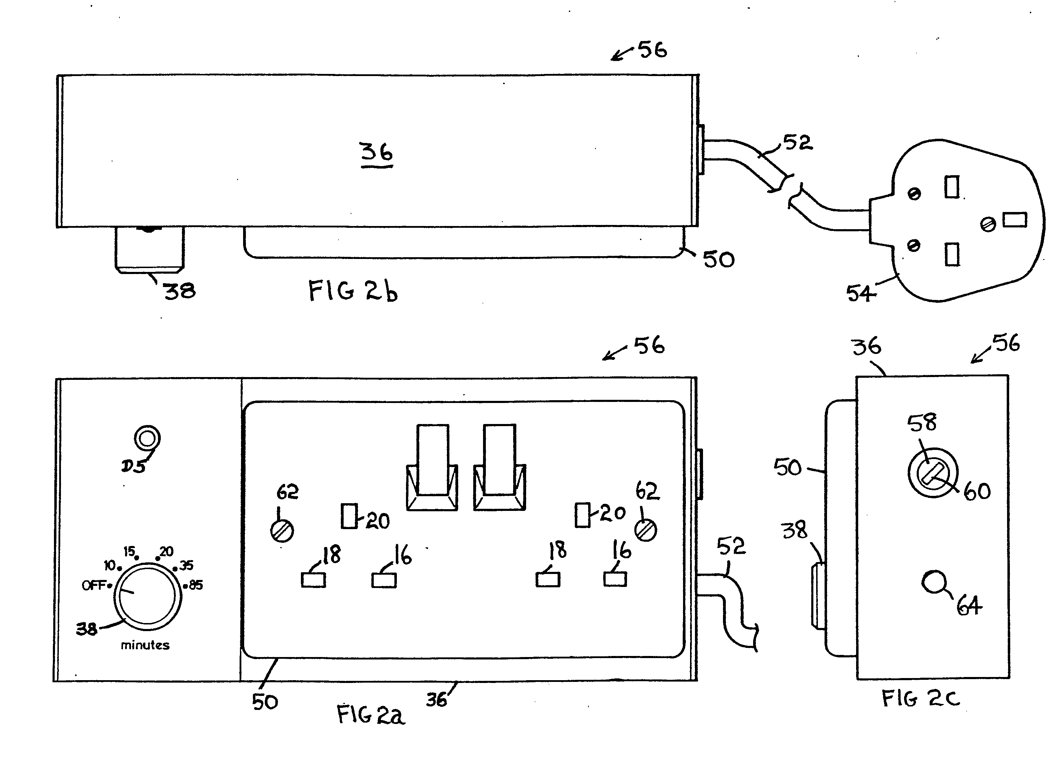

In Figures 2 a-c the circuit is contained within an outer housing 36 having two conventional square pin 13 amp sockets defining the outputs 16, 18 and 20. The two sockets are located on a carrier member 50. The housing supports a knob 38 for operating the switch SW1,and the LED indicator D5 is located adjacent the knob. Already, many modifications are possible, depending on the particular application intended for the device. For example, the device may be connected in line with the controlled equipment (such as a central heating unit). In this instance, the housing would not need to provide 13 amp sockets and pins.

The two sockets form a double gang socket to operate two electric heaters each having a similar thermal response.

Still further, the device may carry a single 13 amp socket. Power is via a lead 52 connected to the power supply via a plug 54.

At rest, when there is no e.m.f. from the secondary winding of the transformer T1, the output collector of the Darlington pair Q1 is close to ground (0 volts). The switching transistor Q2 which controls current flow through the winding of relay RLI is off, with its collector at a positive voltage. In this state relay RLI connects the capacitor C4 - (which does not carry a charge at this time) to the switch SW1. The transistor Q3 which controls current flow through the winding of relay RL2 is off and its drain voltage is positive.

When an electrical device, for example an electric heater, an electric pump or a control for a heating system is connected to the device and switched on, an a.c. current flows through the live input 10 and through the primary winding of the transformer T1 inducing an e.m.f. in the secondary winding.

The secondary e.m.f. modulates the base of the Darlington pair Q1, causing the collector to produce a square wave. The square wave from OV to a positive voltage will cause a d.c. rising voltage to be present at capacitor C3, and also at the base of transistor Q2 via the diode D4 acting as a diode pump. The collector of Q2 will now go to 0 volts energising the relay RL1, and charging the capacitor C4 to a positive value via the relay contacts.

When the electrical line current stops flowing in the primary winding of transformer T1, due to, for example operation of a thermostat in the equipment connected to the outputs 16, 18 and 20, the collector of transistor Q1 will go to 0 volts. The collector of transistor Q2 will go positive, and now the charged capacitor C4 will discharge via the de-energised relay contacts through a resistor combination selected by switch SW1.

The rate of discharge of capacitor C4 is dependant on the resistance of the combination selected by switch SW1. In the off position of switch SW1, capacitor C4 discharges very quickly having little effect upon transistor Q3. In the remaining 5 positions the discharge rate is 10 mins, 15 mins, 20 mins, 35 mins and 85 mins respectively. When a positive voltage is present at the gate of transistor Q3 it turns on. Unlike transistors Q1 and Q2 which are current devices, transistor Q3 is a voltage dependent device having a high impedance at its gate. Once transistor Q3 turns on, relay RL2 energises thus breaking continuity in the live line, and lighting the LED indicator D5. During this time the electrical device connected to the sense unit output will have made its electrical contact (usually a thermostat) and is now waiting for the timing combination of capacitor C4, discharge load 24-34 and transistor Q3 to time-out. On time-out of the combination, relay RL2 is de-energised and once again current will flow through the primary of T1 so that operation of the equipment connected to the output resumes.

The arrangement of Figures 1 and 2 will typically be used to control the supply of current to a thermostatically controlled heater or to a central heating pump. When the heater is turned on, the temperature will rise until it reaches the thermostat setting whereupon the thermostat will open, interrupting the current supply. This interruption will be sensed by the control device which will initiate a "rest" period of length as set by switch SW1. The temperature will gradually fall, and most likely will cause the thermostat to re-close prior to expiry of the rest period and thus modify the usual thermostat cycle. But for the control device, the system would consume energy immediately the thermostat closed. The control device therefore assists in reducing the energy consumed.

Although this device is described and illustrated as a stand alone unit, it will be understood that for some applications it may incorporate a thermostatic unit thus obviating the need for the heater or heating system to have a thermostat. Also, the control device may be built in to the programming and control circuitry of a boiler or other central heating system. When the device is used in a central heating system it may serve a frost-protection function. The device may be adjusted so that it circulates hot water round the system at intervals sufficient to prevent the system freezing up. In this case it may be necessary to adjust the time constant of the capacitor load combination to provide "off" periods greater than 85 minutes.

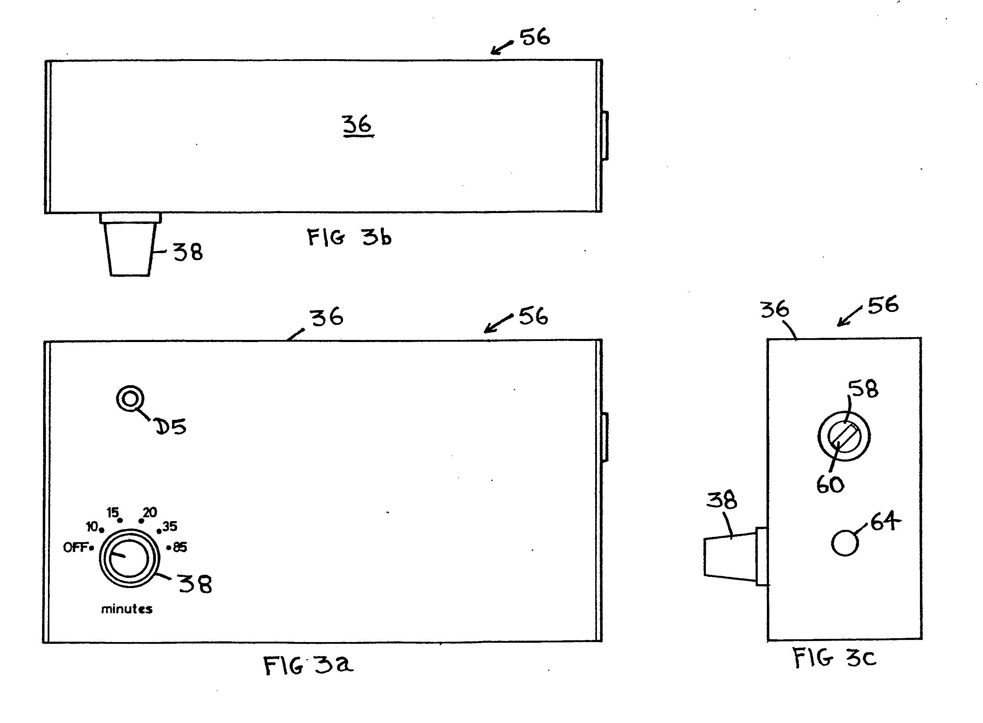

The electrical control device can also be used for other purposes. Thus, Figures 3 a-c show front, top and end views respectively of an electrical control unit 56. Similar parts as in Figures 2 a-c have been given the same reference numerals and their precise construction and operation will not again be given.

Further, the circuit shown in Figure 1 may be modified to be a thyristor based circuit, or a digitial clock based circuit. Generally, it will be appreciated that the electrical control device has a circuit which looks for a break in current flow, rather than an attempt by an electrical system to restart. Thus the electrical control device puts the required delay as from the time of interruption in the electrical current, rather than as from the attempt to' re-start the electrical system, for example when the temperature in a room could be falling rapidly in the case of central heating.

In addition to the control device being used in an electrically controlled heating system, the control device can also be used in other systems, for example in refrigeration systems, cooling systems and air conditioning systems. Thus the control device may be used on chilled drinks dispensing machines.

It is to be appreciated that the embodiments of the invention described above with reference to the accompanying drawings have been given by way of example only and that modifications may be effected. Thus, for example, Figures 2 c and 3 c show a fuse cover 58 provided with a slot 60 for receiving a screw driver (not shown). Removal of the fuse cover 58 enables a fuse to be changed should this be necessary. As an alternative to employing the fuse cover 58, a fuse may be mounted inside the carrier member 50 which can easily be removed from the outer housing 36 by undoing screws 62. Figures 2 c and 3 c also show the preferred position 64 for a hole in the outer housing 36 for receiving the cable 52. The position of the hole 64 may however be varied as may be desired and appropriate.

## Claims

1. An electrical control device including means responsive to an interruption in current flow to prevent re-establishment of said current flow for a predetermined period after said interruption.

2. An electrical control device as claimed in Claim 2, wherein said predetermined period is adjustable between a plurality of values.

3. An electrical control device according to Claim 1 or Claim 2, wherein said means for sensing a break in said current flow include first switch means responsive to the presence or absence of current flow, a capacitor connectable via said switch means to a voltage source or to at least one discharge load and second switch means responsive to the stored voltage across said capacitor and operable to disconnect the current flow.

4. An electrical control device according to Claim 3, wherein said first switch means includes relay responsive to said current flow to connect said capacitor to a voltage source, and responsive to a break in said current flow to connect said capacitor to said at least one discharge load.

5. The electrical control device according to Claim 3 or Claim 4, wherein said at least one discharge load includes a plurality of discharge resistors selectively connectable to said capacitor.

6. An electrical control device according to Claim 5, wherein said first switch means further includes a manually operable switch for switching between said plurality of discharge resistors.

7. An electrical control device according to any one of Claims 3 to 6, wherein said second switch means includes a relay operable to disconnect said current flow and switched by a field effect transistor responsive to the voltage stored by said capacitor.

8. An electrical control device according to any one of the preceding claims which further includes display means for indicating when the device is preventing re-establishment of the current flow.

9. An electrical control device according to any one of the preceding Claims, which includes a thermostat for causing said break in said current flow.

10. A thermostatically operated heating system incorporating the electrical control device as claimed in any one of Claims 1 to 9.

FIG1

56

36

52

50

38

54

FIG 2b

56

D5

62

20

62

20

18

16

18

16

52

15  20
10      35
OFF      85

38

minutes

50

36

FIG 2a

36

56

58

60

50

38

64

FIG 2c

EP 0 399 115 A1

FIG 3c

FIG 3b

FIG 3a

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-3864611 (T. CHANG)<br>* abstract *<br>* column 5, line 48 - column 9, line 3; figure 2 * | 1, 9, 10 | G05D23/19<br>H02H7/08 |
| Y | | 2-8 | |
| X | US-A-3774082 (T. CHANG)<br>* abstract; figure 1 * | 1 | |
| Y | | 3-7 | |
| X | US-A-4128854 (R. RUMINSKY)<br>* abstract; figure 1 * | 1, 9 | |
| Y | EP-A-0090758 (CARRIER CORPORATION)<br>* abstract *<br>* page 10, lines 20 - 21 *<br>* page 12, lines 8 - 11; figure 1 * | 2, 8 | |
| Y | DE-A-2007598 (NIPPONDENSO K.K.)<br>* page 4, line 27 - page 5, line 29; figure 1 * | 3 | |

TECHNICAL FIELDS
SEARCHED (Int. Cl.5 )

H02H
G05D

The present search report has been drawn up for all claims

| Place of search | Date of completion of the search | Examiner |
|---|---|---|
| THE HAGUE | 03 NOVEMBER 1989 | HELOT H.V. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P0401)